# EUROPÄISCHE PATENTSCHRIFT

(11) **EP 1 809 517 B1**
(45) Veröffentlichungstag und Bekanntmachung des Hinweises auf die Patenterteilung: **24.12.2008**
(21) Anmeldenummer: 05808162.1
(22) Anmeldetag: 28.10.2005
(51) Int. Cl.: B60R 21/20

(54) **AIRBAGKLAPPENSYSTEM**
AIRBAG FLAP SYSTEM
SYSTEME DE VOLET D'AIRBAG

(30) Priorität: 29.10.2004 DE 102004053132
(43) Veröffentlichungstag der Anmeldung: 25.07.2007
(73) Patentinhaber: Faurecia Innenraumsysteme GmbH, 76767 Hagenbach (DE)
(72) Erfinder: STEINKE, Stefan, 44651 Herne (DE)
(74) Vertreter: Pfenning, Meinig & Partner GbR
(86) Internationale Anmeldenummer: PCT/EP2005/011705
(87) Internationale Veröffentlichungsnummer: WO 2006/045635

(56) Entgegenhaltungen:
- EP-A- 1 002 703
- DE-A1- 19 835 612
- US-A- 5 458 361
- US-A- 6 042 139
- PATENT ABSTRACTS OF JAPAN Bd. 1998, Nr. 08, 30. Juni 1998 (1998-06-30) -& JP 10 076544 A (KANSEI CORP), 24. März 1998 (1998-03-24)

## Beschreibung

Die Erfindung betrifft ein Airbagklappensystem, bestehend aus einem Träger und einem Airbagdeckel, und ein Verfahren zur Herstellung dieses Airbagklappensystems.

Ein Airbagklappensystem, bestehend aus einem Träger und einem Airbagdeckel, ist ein Teil einer Airbagvorrichtung, die, in einem Automobil eingebaut, die Aufgabe hat, Personen im Falle eines Unfalls vor schwereren Schäden zu bewahren. Es ist deswegen heutzutage allgemein üblich, in einem Automobil eine oder mehrere Airbagvorrichtungen einzubauen.

Neben dem Airbagklappensystem mit dem darin enthaltenen Airbagdeckel sind weitere wichtige Bestandteile einer Airbagvorrichtung der Airbag und der Airbagauslöser. Diese Bestandteile müssen verschiedene Aufgaben erfüllen. Der Airbagauslöser hat die Aufgabe, bei einer Auslösung möglichst schnell den Airbag aufzublähen. Der Airbagdeckel trennt den sich im Ausgangszustand befindenden Airbag vom Innenraum des Kraftfahrzeugs. Im Airbagdeckel integriert sind eine oder mehrere Airbagklappen. Die Airbagklappen haben die Aufgabe, ein Entfalten des Airbags in den Innenraum zu ermöglichen. Der Airbagdeckel ist in der Regel mit einem Gehäuse verbunden, in dem der Airbag und der Airbagauslöser untergebracht und unter den Airbagklappen positioniert sind.

Aufgrund der hohen Bedeutung des Insassenschutzes ist es notwendig, eine möglichst einwandfreie Funktion der Airbagvorrichtung zu gewährleisten. Es ist u. A. dafür Sorge zu tragen, dass die im Airbagdeckel integrierten Airbagklappen eine Entfaltung des Airbags nicht zu stark behindern, um die Schutzwirkung des Airbags nicht zu mindern. Auch ist bei den im Airbagdeckel integrierten Airbagklappen darauf zu achten, dass diese sich beim Entfalten des Airbags nicht von ihrem Träger ablösen oder sogar zersplittern, um die Insassen nicht zusätzlich zu gefährden.

Es ist bekannt, Airbagdeckel aus einem weichen Kunstharz, z.B. thermoplastische Elastomere, herzustellen und diesen Airbagdeckel in einen Träger aus hartem Kunstharz, z.B. Polypropylen, als Einsatz einzufügen. In den Airbagdeckel sind Sollbruchstellen vorgesehen, durch die Airbagklappen definiert werden, die sich beim Entfalten des Airbags öffnen. Der weiche Kunstharz des Deckels leistet Scharnierarbeit beim Öffnen der Klappen und verhindert damit ein Loslösen von dem Träger. Aufgrund der elastischen Eigenschaften des weichen Kunstharzes ist gleichsam auch einem Zersplittern der Airbagklappen entgegengewirkt.

Nachteil bei einer Verwendung von einem harten Kunstharz als Träger und einen weichen Kunstharz als Deckel ist, dass die Kunstharze schlecht aneinander haften.

Aus dem Dokument US 6 042 139 A ist ein Airbagklappensystem mit einem Airbagdeckel bekannt, der den Merkmalen der Präambel des Anspruchs 1 entspricht, wobei die Umrandung des Airbagdeckels von dem Träger ober- und unterseitig abgedeckt ist. Die Verbindung der Umrandung mit dem Träger ist jedoch gerade so vorgesehen, dass sich der Airbagdeckel bei der Airbagauslösung von der Umrandung löst und der Deckel durch einen zusätzlich am Deckel gebildeten Scharnierflansch mit der Struktur verbunden und daran zurückgehalten wird.

Die Erfindung hat es sich zur Aufgabe gesetzt, ein Airbagklappensystem, bestehend aus einem Träger und einem Airbagdeckel, zu entwerfen, das einen besonders festen und alterungsbeständigen Verbund zwischen Träger und Airbagdeckel vorsieht, um eine gute Scharnierwirkung ohne Loslösen der Airbagklappen zu gewährleisten. Insbesondere sieht die Erfindung ein Verfahren vor, mit dem solch ein Airbagklappensystem kostengünstig hergestellt werden kann.

Die Erfindung löst die Aufgabe durch die Merkmale des Patentanspruchs 1. Der Patentanspruch 18 offenbart ein Verfahren zur Herstellung eines erfindungsgemäßen Airbagklappensystems.

Die Erfindung betrifft ein Airbagklappensystem aus einem Airbagdeckel mit einer zu einem Innenraum hin richtbaren sichtseitigen Stirnfläche, und einem Träger. Erfindungsgemäß besteht der Airbagdeckel des Airbagklappensystems zu mindestens 80 Gewichtsprozent aus einem ersten Kunstharz. Der Träger des Airbagklappensystems besteht zu mindestens 80 Gewichtsprozent aus einem zweiten Kunstharz. Das elastische Biegemodul des ersten Kunstharzes ist dabei niedriger als das elastische Biegemodul des zweiten Kunstharzes. Der Airbagdeckel weist eine zumindestens bereichsweise in den Träger hineinragende Umrandung auf. Diese Umrandung des Airbagdeckels ist vom Träger ober- und unterseitig abgedeckt.

Unter "Kunstharz" wird vorliegend eine Reinform eines Kunstharzes oder eine Mischung mehrerer Kunstharze verstanden, wobei der Reinform bzw. der Mischung auch Additive bzw. Zuschläge beigefügt sein können, welche ebenfalls als zu dem "ersten" bzw. "zweiten" "Kunstharz" gewichtsprozentmäßig zugehörig angesehen werden. Des weiteren wird der Begriff "Kunstharz" synonym zu dem Begriff "Kunststoff" verwendet.

Aufgrund dessen, dass der Airbagdeckel eine Umrandung aufweist, die ober- und unterseitig vom Träger abgedeckt ist, sind Airbagdeckel und Träger miteinander verkeilt. Dadurch ist sicher gestellt, dass trotz schlechter Haftungseigenschaften der beiden Kunstharze der Airbagdeckel und Träger auch bei einem Entfalten des Airbags fest miteinander verbunden sind. Dadurch, dass das erste Kunstharz ein niedrigeres elastisches Biegemodul aufweist als das zweite Kunstharz, wird bei einem Öffnen der Airbagklappen eine Scharnierung erreicht. Als Scharnierachsen eignen sich insbesondere die Bereiche, in denen die Umrandung des Airbagdeckels von dem Träger ober- und unterseitig abgedeckt ist.

Eine vorteilhafte Ausführungsform der Erfindung sieht vor, die Umrandung mit einem oder mehreren Hinterschnitten zu versehen. Durch diese Hinterschnitte ist die Verbindung von Airbagdeckel und Träger zusätzlich fixiert.

Eine weitere vorteilhafte Ausführungsform der Erfindung sieht vor, solche Hinterschnitte dadurch zu erzeugen, dass man in die Umrandung Löcher setzt. Löcher sind sehr einfach zu erzeugen. Diese Löcher können insbesondere durchgängig sein, ebenso einfach zu erzeugen sind auch Senkungen.

Eine weitere vorteilhafte Ausführungsform der Erfindung sieht vor, die Umrandung mit einen oder mehreren Noppen zu versehen. Durch diese Noppen ist der Airbagdeckel zusätzlich im Träger fixiert.

Eine weitere vorteilhafte Ausführungsform der Erfindung sieht vor, dass ein oder mehrere Noppen auf Höhe der Stirnfläche des Airbagdeckels enden. Dies ist insbesondere für den Herstellungsprozess solch eines Airbagklappensystems vorteilhaft: Umspritzt man den vorgefertigten Airbagdeckel mit dem Trägermaterial, entstehen aufgrund der hohen Temperaturdifferenzen zwischen Airbagdeckel und Trägermaterial lokale mechanische Verspannungen, die zu einer Wölbung des Airbagdeckels, insbesondere der Umrandung des Airbagdeckels, führen. Stimmt man die Länge der sich auf der Umrandung befindenden Noppen auf die Form des Spritzgusswerkzeugs ab, wirken diese als Abstandshalter einer Verformung der Umrandung entgegen. Dadurch wird verhindert, dass nach dem Beenden des Umspritzens und nach der Abkühlung insbesondere die Stirnfläche des Airbagdeckels aufgrund einer Verformung der Umrandung ungewünscht gewölbt ist.

Eine weitere vorteilhafte Ausführungsform der Erfindung sieht vor, die Stirnfläche und/oder die der Stirnfläche entgegengesetzten Seite des Airbagdeckels mit einer netzartigen Struktur von Stegen zu versehen. Durch solch eine netzartige Struktur von Stegen, die beispielsweise rechteckförmig oder wabenförmig sein kann, ist ein Wölben der Stirnfläche aufgrund thermischer Ausdehnung vermindert. Diese netzartige Struktur bewirkt zusätzlich mit geringem Materialaufwand eine Versteifung des Airbagdeckels. Ein ungewünschtes Reißen des Airbagdeckels beim Entfalten des Airbags ist damit vermindert. Damit ist ein Verzicht auf beispielsweise einer Metallplatte möglich.

Eine weitere vorteilhafte Ausführungsform der Erfindung sieht vor, dass der Airbagdeckel am Rand seiner Stirnfläche einen Kragen aufweist. Im einen Herstellungsprozess solch eines Airbagklappensystems sorgt der Kragen mit einem darauf entsprechend abgestimmten Spritzgusswerkzeug dafür, dass beim Umspritzen des Airbagdeckels mit dem Trägermaterial nicht ungewünscht Trägermaterial auf die Stirnfläche gelangen kann.

Eine besonders vorteilhafte Ausführungsform der Erfindung sieht vor, dass Träger und Airbagdeckel gegeneinander schaumdicht abgeschlossen sind.

Dadurch ist es möglich, gemeinsam auf Träger und Airbagdeckel eine Schaumschicht aufzubringen, ohne weitere Maßnahmen treffen zu müssen, die verhindern, dass der Schaum ungewünscht in die ansonsten vorhandenen Zwischenbereiche Träger-Airbagdeckel dringt.

Erreicht werden kann diese Schaumdichtigkeit beispielsweise durch Umspritzen des Airbagdeckels mit einer den späteren Träger bildenden Kunstharzmasse.

Eine weitere vorteilhafte Ausführungsform der Erfindung sieht vor, dass eine ein- oder mehrlagige Oberschicht den Träger und der Airbagdeckel bedeckt. Insbesondere für das optische Erscheinungsbild ist es vorteilhaft, den Träger und der Airbagdeckel mit einer Oberschicht zu bedecken. Diese Oberschicht kann insbesondere aus Kunststoff, aus Textilfasern oder aus Leder bestehen.

Eine weitere vorteilhafte Ausführungsform der Erfindung sieht vor, dass der äußere Rand des Airbagdeckels mit einer oder mehreren Aussparungen versehen ist. Unter dem äußeren Rand soll hier der äußere Rand des Schusskanals des Airbagdeckels, durch den das Entfalten des Airbags kanalisiert wird, unter Ausschluss der in den Träger hineinragenden Umrandung verstanden werden. Diese Aussparungen können sich sowohl am äußeren Rand des Airbagdeckels unterhalb der Umrandung als auch am äußeren Rand des Airbagdeckels oberhalb der Umrandung befinden. Als einfach herzustellende Form können die Aussparungen insbesondere als Sacklöcher realisiert sein. Möglich sind aber auch z.B. Öffnungen mit Hinterschnitten oder kanalförmige Aussparungen. Vorteilhafterweise sind diese Aussparungen parallel zur Stirnfläche des Airbagdeckels ausgerichtet. In diese Aussparungen greift bevorzugterweise der Träger ein. Dadurch ist der Airbagdeckel zusätzlich fixiert. Die Gefahr ist vermindert, dass bei einem Öffnen des Airbagdeckels durch das Entfalten des Airbags sich der Airbagdeckel bei einem Abreißen der in den Träger hineinragenden Umrandung aus dem Träger löst.

Eine weitere vorteilhafte Ausführungsform der Erfindung sieht vor, dass das zweite Kunstharz ein elastisches Biegemodul in dem Bereich von 2000 MPa bis 5000 MPa aufweist. Das elastische Biegemodul soll hier, wie auch bei den Biegemodulangaben im folgenden Text, nach DIN 53457 bestimmt sein. Ein Kunstharz mit einem elastischen Biegemodul von weniger als 2000 MPa ist aufgrund seiner geringen Steifigkeit schlecht zu handhaben, ein Kunstharz mit einem elastischen Biegemodul von mehr als 5000 MPa ist spröde und neigt zum Zerspringen.

Eine weitere vorteilhafte Ausführungsform der Erfindung sieht vor, dass das zweite Kunstharz einen thermischen Ausdehnungskoeffizienten von 1*10⁻⁵ °C⁻¹ bis 6*10⁻⁵ °C⁻¹ aufweist. Der thermische Ausdehnungskoeffizient soll hier, wie auch bei den Angaben im folgenden Text, nach DIN 53752 bestimmt sein. Ein thermischer Ausdehnungskoeffizient von kleiner als 1*10⁻⁵ °C⁻¹ kann bewirken, dass die mechanischen Spannungen zwischen Träger und Airbagdeckel zu hoch werden und zu einer Beschädigung führen. Ein thermischer Ausdehnungskoeffizient von höher als 6*10⁻⁵ °C⁻¹ kann bewirken, dass, ist z.B. der Träger Teil eines mehrkomponentigen Systems, wie z.B. in der Innenraumverkleidung eines Automobils, hohe Kräfte auf die mit dem Träger verbundenen Teile ausgeübt werden, die zu einer Verformung führen können.

Eine weitere vorteilhafte Ausführungsform der Erfindung sieht vor, dass das erste Kunstharz ein elastisches Biegemodul in dem Bereich von 100 MPa bis 1000 MPa aufweist. Ein Kunstharz mit einem elastischen Biegemodul von weniger als 100 MPa erschwert ein definiertes Aufbrechen des Airbagdeckels beim Entfalten des Airbags. Ein Kunstharz mit einem elastischen Biegemodul von mehr als 1000 MPa kann wegen erhöhter Steifigkeit und Sprödigkeit bei niedrigen Temperaturen die Funktion des Airbags beeinträchtigen.

Eine weitere vorteilhafte Ausführungsform der Erfindung sieht vor, dass das erste Kunstharz einen thermischen Ausdehnungskoeffizienten von etwa 8*10⁻⁵ °C⁻¹ bis 20*10⁻⁵ °C⁻¹ aufweist. Ein thermischer Ausdehnungskoeffizient von niedriger als 8*10⁻⁵ °C⁻¹ heißt, dass der Airbagdeckel spröde ist und zum Zerspringen neigt. Ein thermischer Ausdehnungskoeffizient von höher als 20*10⁻⁵ °C⁻¹ kann zur Folge haben, dass die mechanischen Spannungen zwischen Airbagdeckel und Träger so groß werden, dass sich die Stirnfläche des Airbagdeckels sichtbar wölbt und unter Umständen das Airbagklappensystem dauerhaft geschädigt.wird.

Eine weitere vorteilhafte Ausführungsform der Erfindung sieht vor, dass der erste Kunstharz aus einem oder mehreren Kunstharzen der Gruppen thermoplastische Olefine, thermoplastische Styrole, thermoplastische Polyurethane, thermostatische Polyurethane, thermoplastische Polyester oder Kautschuk besteht. Diese Kunstharze sind geeignet, um oben genannte Bedingungen für das elastische Biegemodul und den thermischen Ausdehnungskoeffizienten zu erfüllen.

Eine weitere vorteilhafte Ausführungsform der Erfindung sieht vor, dass der zweite Kunstharz aus einem oder mehreren Kunstharzen der Gruppen thermoplastische Olefine, thermoplastische Styrole, thermoplastische Polyurethane, thermostatische Polyurethane oder Kautschuk besteht. Diese Kunstharze sind geeignet, um oben genannte Bedingungen für das elastische Biegemodul und den thermischen Ausdehnungskoeffizienten zu erfüllen.

Eine weitere vorteilhafte Ausführungsform der Erfindung sieht vor, dass der Träger eine Instrumententafel ist.

Des weiteren offenbart die Erfindung ein Verfahren zum Herstellen eines Airbagklappensytems, mit den Schritten, dass zunächst ein Airbagdeckel, der mindestens zu 80% aus einem erstem Kunstharz besteht, und der zumindest bereichsweise eine Umrandung 3 aufweist, wobei die Umrandung mit einem oder mehreren Noppen 5 versehen ist, in ein Spritzgusswerkzeug 10 so eingelegt wird, dass die Umrandung des Airbagdeckels im geschlossenen Spritzgusswerkzeug 10 die Oberfläche des Werkzeugs nicht berührt, und die Noppen 5 auf Höhe der Werkzeugoberfläche enden, so dass die Noppen 5 als Abstandshalter eine Verformung der Umrandung 3 in dem Spritzgusswerkzeug vermindern, und in einem nächsten Schritt der Airbagdeckel 1 mit einem Trägermaterial umspritzt wird, wobei das Trägermaterial mindestens zu 80% aus einem zweitem Kunstharz besteht.

Vorzugsweise hat das zweite Kunstharz ein höheres elastisches Biegemoment als das erste Kunstharz.

Es wird ein Airbagdeckel mit oben genannten Merkmalen auf diese Weise in einem Spritzgusswerkzeug positioniert, dass nach dem Umspritzen die Umrandung einschließlich der Noppen in den Träger hineinragt. Die auf der Umrandung des Airbagdeckels sich befindenden Noppen berühren vorzugsweise mit beiden Enden das Spritzgusswerkzeug und vermindern dadurch beim Umspritzen eine Verformung der Umrandung (ein direkter Kontakt zwischen Noppen und Werkzeugoberfläche des Spritzgusswerkzeugs ist zwar sehr vorteilhaft, aber nicht zwingend notwendig. Je größer allerdings der Abstand zwischen den Enden der Noppen und der Werkzeugoberfläche ist, desto stärker kann der Grad der Verformung der Umrandung sein).

Besonders vorteilhaft ist es, wenn die Noppen im Vergleich zu dem Spaltmaß des geschlossenen Werkzeugs, in dem sie positioniert werden, ein leichtes Übermaß besitzen. Hierdurch wird eine Klemmwirkung erzeugt.

Neben der Verminderung der Verformung der Umrandung fixieren die Noppen den Airbagdeckel im Trägermaterial. Letzteres ermöglicht insbesondere auch, für Träger und Airbagdeckel Kunstharze zu verwenden, die nur schlecht oder überhaupt nicht aneinander haften. Die Verbindung zwischen Airbagdeckel und Träger kann erfindungsgemäß über eine formschlüssige Verbindung der beiden Bauteile gewährleistet werden.

Es ist nicht zwingend notwendig, dass die Noppen beidseitig die Werkzeugoberfläche berühren. Möglich ist auch, dass die Noppen nur an einer Seite der Umrandung angeordnet sind und nur an einer Oberflächenseite des Werkzeugs anliegen. Dies ist insbesondere dann möglich, wenn der Einspritzkanal so im Werkzeug liegt, dass beim Einspritzen einer Kunststoffmasse die Kunststoffmasse einen Druck auf die Umrandung ausübt, durch den die Umrandung in Richtung der Werkzeugoberfläche gepresst wird, an der die Noppen anliegen, die Umrandung also angestützt ist.

Die Noppen können in ihrer Form variiert werden, beispielsweise auch als kurze Stege ausgebildet werden. Zu beachten ist allerdings, dass die Noppen aufgrund ihrer Abmaße beim Umspritzen mit dem Material des Trägers den Fluss der Kunstharzmasse nicht zu stark behindern dürfen. Aus diesem Grund bietet sich vor allem eine Vielzahl von Noppen/Stegen mit kleinen Abmaßen an.

Vorzugsweise haben die Noppen einen Durchmesser von etwa 1,5mm bis 2mm und eine Höhe von etwa 2mm. Diese Größen sind natürlich bauteilabhängig und können grundsätzlich breit variiert werden. Damit derartige Noppen jedoch nicht zu stark als Fließbremsen während des Einspritzens einer Kunststoffmasse in das Werkzeug wirken, bieten sich Durchmesser von weniger als 5mm an.

Des weiteren ist eine gleichmäßige Verteilung der Noppen umlaufend der Umrandung des Bauteils und somit eine gleichmäßige Positionierung der Noppen an der Werkzeugoberfläche vorteilhaft.

Die Noppen könneneinstückig mit der Umrandung verbunden sein, oder nachträglich and der Umrandung befestigt werden, beispielsweise durch Kleben.

Ein weiterer Vorteil dieses Verfahrens ist es, dass mit wenigen Schritten und besonders kostengünstig ein Airbagklappensystem hergestellt werden kann, das den Anforderungen an ein solches System genügt, wie z.B. die Schaffung einer festen Verbindung von Airbagdeckel und Träger, wobei Airbagdeckel und Träger entsprechend ihrer Aufgaben unterschiedliche elastische Biegemodule besitzen, wie auch das Gewährleisten einer möglichst glatten Stirnfläche des Airbagdeckels.

Grundsätzlich ist das Verfahren nicht auf die Herstellung eines Airbagklappensystems beschränkt. Es lässt sich auch für die Herstellung anderer mehrteiliger Bauteile verwenden, bei denen es insbesondere auf eine stabile und dichte, insbesondere schaumdichte, Verbindung der einzelnen Elemente ankommt.

Eine vorteilhafte Weiterbildung des Verfahrens sieht vor, dass der Airbagdeckel, vorzugsweise in einem einzigen Prozessschritt, durch Spritzgießen einer thermoplastischen Kunstharzmasse hergestellt wird.

Die Erfindung wir nun anhand mehrerer Figuren erläutert. Die Figuren zeigen:
**Figur 1** zeigt skizzenhaft ein Airbagklappensystem mit einem Airbagdeckel in einem Querschnitt.
**Figur 2** zeigt den Airbagdeckel (1) aus Figur 1 in der Aufsicht.
**Figur 3** zeigt den Airbagdeckel (1) aus Figur 1 in der Unteransicht.
**Figur 4** zeigt den Airbagdeckel positioniert im Spritzwerkzeug.

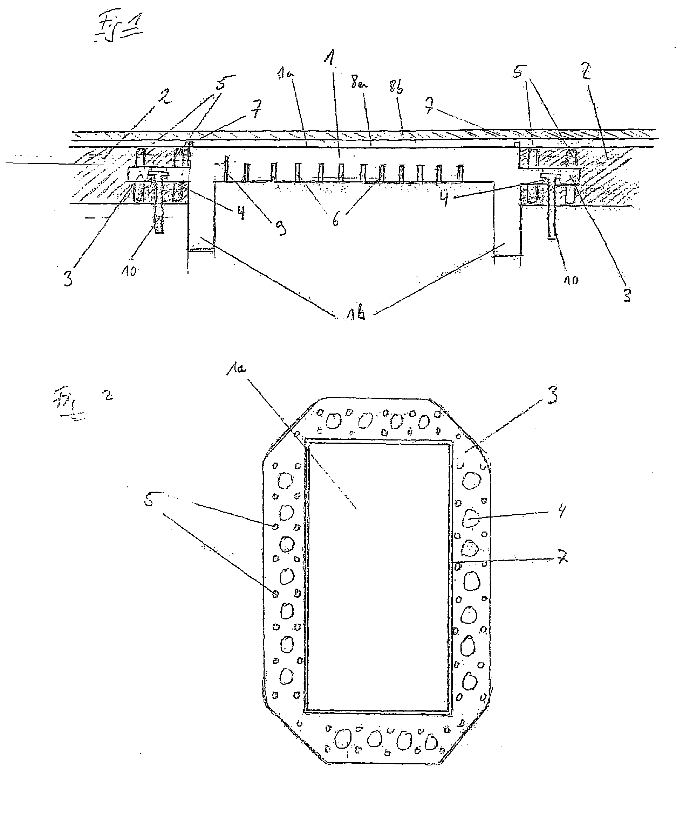

Figur 1 zeigt skizzenhaft einen Querschnitt eines Airbagklappensystems nach der Lehre der Erfindung. Ein Airbagdeckel (1) mit einer dem Innenraum hingerichteten ebenen Stirnfläche (1a) aus 100 Gewichtsprozent thermoplastischen Polyester-Elastomer mit einem elastischen Biegemodul von 600 MPa und einem linearen thermischen Ausdehnungskoeffizienten 14*10⁻⁵ °C⁻¹ wird randseitig umschlossen von einem Träger (2) aus 70 Gewichtsprozent Polypropylen und 30 Gewichtsprozent Glasfaseranteil, wobei dieses aus Polypropylen und Glasfaser gebildete Kunstharz ein elastisches Biegemodul von 3500 MPa und einen thermischen Ausdehnungskoeffizienten von 2,5*10⁻⁵ °C⁻¹ hat.

Der Airbagdeckel (Länge 312mm, Breite 216mm) weist eine als Steg geformte Umrandung (3) (Breite längsseitig des Airbagdeckels: 28mm, Breite breitseitig des Airbagdeckels: 32mm) auf, die in den Träger hineinragt, und ober- und unterseitig vom Träger bedeckt ist. In der Umrandung befinden sich mittig gesetzte Durchgangslöcher (4) mit einem Durchmesser von 10 mm, die als Hinterschnitte wirken und den Airbagdeckel zusätzlich im Träger fixieren. Auch beinhaltet die Umrandung mehrere Noppen (5), die fast durchgängig in zwei Reihen paarweise zwischen den einzelnen Durchgangslöchern angeordnet sind. Die Noppen enden auf der Höhe der Stirnfläche des Airbagdeckels, die anderen Enden liegen ebenfalls in einer gemeinsamen Ebene. In die Umrandung integriert sind zwei gegenüberliegende Metallbrücken mit jeweils zwei Schrauben (10). Diese Schrauben sind dafür vorgesehen, ein Airbagmodul an den Deckel zu befestigen.

Im äußeren Rahmen des Airbagdeckels sind umlaufend mehrere Sacklöcher (11) eingefügt. Durch diese Sacklöcher wird eine weitere Fixierung des Airbagdeckels im Träger erreicht. Des weiteren ist der Airbagdeckel so gestaltet, dass er mit seinem unterem Rahmen (1b) über den Träger (2) hinaus ragt, mit dem Zweck, das Entfalten des Airbags zu kanalisieren.

Die Stirnfläche (1a) des Airbagdeckels (1) besitzt am Rand ein Kragen (7) mit der Höhe 1mm und der Breite 0,5mm. Dadurch ist beim Umspritzen mit dem Trägermaterial verhindert, dass Trägermaterial ungewünscht auf die Stirnfläche gelangt.

Die der Stirnfläche des Airbagdeckels entgegengesetzten Seite ist bis auf einen schmalen Außenrand mit einem netzartiger Struktur (6) rechteckförmiger Stege versehen. Die netzartige Struktur von rechteckförmigen Stegen hat eine Kastengröße von 8mm x 8mm, die Breite der Stege beträgt 1mm, die Erhabenheit der Struktur 6mm. Alternativ bietet sich auch eine wabenförmige Struktur mit vergleichbaren Abmessungen an. Des weiteren sind im Außenrand der der Stirnfläche des Airbagdeckels entgegengesetzten Seite sog. Schwächungslinien (9) eingekerbt. Dadurch wird ein definiertes Öffnen des Deckels beim Entfalten des Airbags gewährleistet. Der vollständige Verlauf dieser Schwächungslinien wird in einer später folgenden Figur skizziert.

Grundsätzlich können die oben angegebenen Abmaße der netzartigen Struktur variieren. Als vorteilhaft hat sich der Bereich 4mm bis 10mm für die Erhabenheit der Stege, 0,5mm bis 3mm für die Breite der Stege und 30mm² bis 80mm² für die Fläche einer einzelnen Wabe herausgestellt. Diese Werte gelten insbesondere auch für andere Wabenformen als wie oben beschriebene Rechteckform.

In dieser Ausführungsform ist die netzartige Struktur mit dem Airbagdeckel einstückig verbunden. Beispielsweise, wie auch erfindungsgemäß bevorzugt, wird der Airbagdeckel zusammen mit der netzartigen Struktur in einem einzigen Spritzgussprozess hergestellt.

Alternativ ist es auch möglich, eine derartige Struktur nachträglich aufzubringen, beispielsweise aufzuschweißen oder aufzukleben. Dies erfordert aber zusätzliche Arbeitsschritte.

Der Airbagdeckel (1) und der Träger (2) sind mit einer zweilagigen Oberschicht (8) ganzflächig bedeckt. Die erste Lage (8a) besteht aus 3mm dicken Polyurethanschaum, die zweite Lage (8b) aus 1mm dicken Polyvinylchlorid.

Figur 2 zeigt den Airbagdeckel (1) aus Figur 1 in der Aufsicht. Die Figur zeigt, dass die stegförmige Umrandung (3) in dem Ausführungsbeispiel ein durchgängiger Bereich ist. Die Hinterschnitte (4) und die Noppen (5) sind entlang der gesamten Umrandung angeordnet. Am Rand der Stirnfläche des Airbagdeckels befindet sich der Kragen (7).

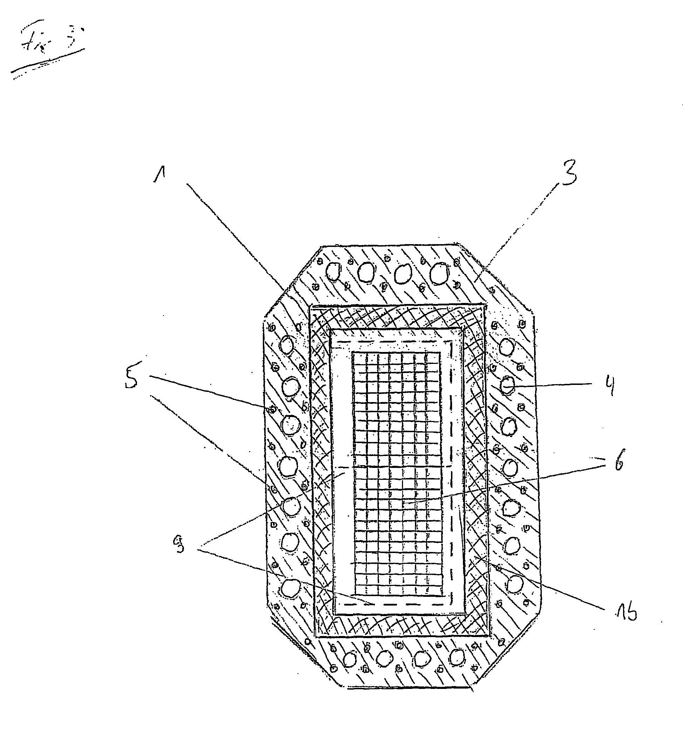

Figur 3 zeigt den Airbagdeckel (1) aus Figur 1 in der Unteransicht. In dieser Ansicht ist die der Stirnfläche entgegengesetzten Seite mit dem Netz rechteckförmiger Aussparungen (6) sichtbar. Der Deckel ist entlang sog. Schwächungslinien (9) eingekerbt. Dadurch wird ein definiertes Öffnen des Deckels beim Entfalten des Airbags erreicht.

Ein Ausführungsbeispiel für das erfindungsgemäße Verfahren zur Herstellung eines Airbagklappensystems soll im Folgenden ebenfalls anhand einer Figur beschrieben werden.

Im ersten Schritt des Verfahrens wird ein Airbagdeckel, der aus 100 Gewichtsprozent thermoplastischem Polyester-Elastomer besteht und eine stegförmige Umrandung mit überwiegend zweireihig angeordneten Noppen aufweist, in einem Spritzgusswerkzeug positioniert. Der Airbagdeckel (1) wird in das Werkzeug so eingelegt, dass die Umrandung des Airbagdeckels (1) im geschlossenen Spritzgusswerkzeug die Oberfläche des Werkzeugs nicht berührt, aber die Noppen (5) die Oberfläche des Spritzgusswerkzeuges berühren.

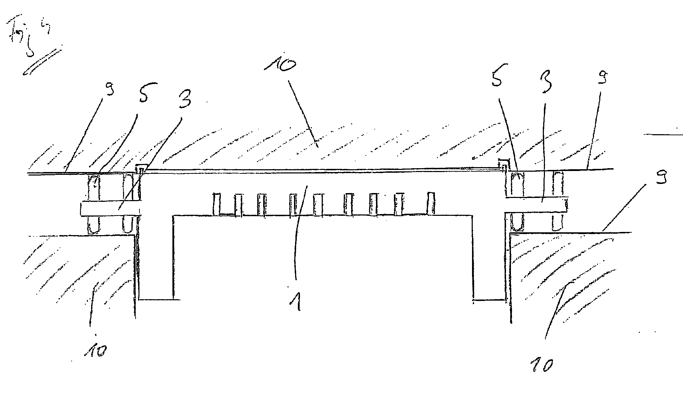

Figur 4 zeigt den Airbagdeckel (1) positioniert im Spritzgusswerkzeug (10). Nach dem Verfahren wird im nächsten Schritt der Airbagdeckel (1) mit dem Trägermaterial Polypropylen umspritzt. Das Polypropylen besitzt beim Umspritzen Temperaturen von etwa 190 °C, während der Airbagdeckel Raumtemperatur besitzt. Aufgrund der hohen Temperaturdifferenz von Airbagdeckel und dem Trägermaterial besteht die Gefahr, dass die Umrandung (3) stark verformt werden würde. Durch die Funktion der Noppen als Abstandshalter wird solch einer Verformung entgegengewirkt.

Der Airbagdeckel (1) mit Umrandung (3), Noppen (5) und netzartiger Struktur (6) wurde zuvor in einem einzigen Prozessschritt durch Spritzgießen der oben angegebenen Kunstharzmasse hergestellt.

## Patentansprüche

1. Airbagklappensystem, enthaltend einen Airbagdeckel (1) mit einer zu einem Innenraum hin richtbaren sichtseitigen Stirnfläche (1a), und einem Träger (2), wobei der Airbagdeckel mindestens zu 80 Gewichtsprozent aus einem ersten Kunststoff besteht, und wobei der Träger mindestens zu 80 Gewichtsprozent aus einem zweiten Kunststoff besteht, und der erste Kunststoff ein niedrigeres elastisches Biegemodul aufweist als der zweite Kunststoff, und der Airbagdeckel eine zumindest bereichsweise in den Träger hineinragende Umrandung aufweist, und die Umrandung (3) des Airbagdeckels von dem Träger ober- und unterseitig abgedeckt ist,
**dadurch gekennzeichnet, dass**
die Umrandung des Airbagdeckels und der Träger derart ausgestaltet sind, dass diese auch bei einem Entfalten des Airbags fest miteinander verbunden sind, und
der Airbagdeckel entlang von Schwächungslinien eingekerbt ist zum Erreichen eines definierten Öffnens des Deckels beim Entfalten des Airbags.

2. Airbagklappensystem nach Anspruch 1, **dadurch gekennzeichnet, dass** die Umrandung einen oder mehrere Hinterschnitte (4) aufweist.

3. Airbagklappensystem nach Anspruch 2, **dadurch gekennzeichnet, dass** die Hinterschnitte durch Löcher in der Umrandung gegeben sind.

4. Airbagklappensystem nach einem der vorhergehenden Ansprüche, **dadurch gekennzeichnet, dass** die Umrandung mit einen oder mehreren Noppen (5) versehen ist.

5. Airbagklappensystem nach Anspruch 4, **dadurch gekennzeichnet, dass** ein oder mehrere Noppen auf Höhe der Stirnfläche des Airbagdeckels enden.

6. Airbagklappensystem nach einem der vorhergehenden Ansprüche, **dadurch gekennzeichnet, dass** die Stirnfläche und/oder die der Stirnfläche entgegengesetzte Seite des Airbagdeckels zur Versteifung mit einer netzartigen Struktur von Stegen (6) versehen ist.

7. Airbagklappensystem nach einem der vorhergehenden Ansprüche, **dadurch gekennzeichnet, dass** der Airbagdeckel am Rand seiner Stirnfläche einen Kragen (7) aufweist.

8. Airbagklappensystem nach einem der vorhergehenden Ansprüche, **dadurch gekennzeichnet, dass** Airbagdeckel und Träger gegeneinander schaumdicht abgeschlossen sind.

9. Airbagklappensystem nach einem der vorhergehenden Ansprüche, **dadurch gekennzeichnet, dass** eine ein- oder mehrlagige Oberschicht (8) den Träger und den Airbagdeckel bedeckt.

10. Airbagklappensystem nach einem der vorhergehenden Ansprüche, **dadurch gekennzeichnet, dass** der äußere Rand des Airbagdeckels mit einer oder mehreren Aussparungen (11) versehen ist.

11. Airbagklappensystem nach einem der vorhergehenden Ansprüche, **dadurch gekennzeichnet, dass** der zweite Kunststoff ein elastisches Biegemodul in dem Bereich von 2000 MPa bis 5000 MPa aufweist.

12. Airbagklappensystem nach einem der vorhergehenden Ansprüche, **dadurch gekennzeichnet, dass** der zweite Kunststoff einen thermischen Ausdehnungskoeffizienten von 1*10⁻⁵ °C⁻¹ bis 6*10⁻⁵ °C⁻¹ aufweist.

13. Airbagklappensystem nach einem der vorhergehenden Ansprüche, **dadurch gekennzeichnet, dass** der erste Kunststoff ein elastisches Biegemodul in dem Bereich von 100 MPa bis 1000 MPa aufweist.

14. Airbagklappensystem nach einem der vorhergehenden Ansprüche, **dadurch gekennzeichnet, dass** der erste Kunststoff einen thermischen Ausdehnungskoeffizienten von 8*10⁻⁵ °C⁻¹ bis 20*10⁻⁵ °C⁻¹ aufweist.

15. Airbagklappensystem nach einem der vorhergehenden Ansprüche, **dadurch gekennzeichnet, dass** der erste Kunststoff aus einem oder mehreren Kunststoffen der Gruppen thermoplastische Olefine, thermoplastische Styrole, thermoplastische Polyurethane, thermostatische Polyurethane, thermoplastische Polyester oder Kautschuk besteht.

16. Airbagklappensystem nach einem der vorhergehenden Ansprüche, **dadurch gekennzeichnet, dass** der zweite Kunststoff aus einem oder mehreren Kunststoffen der Gruppen thermoplastische Olefine, thermoplastische Styrole, thermoplastische Polyurethane, thermostatische Polyurethane oder Kautschuk besteht.

17. Airbagklappensystem nach einem der vorhergehenden Ansprüche, **dadurch gekennzeichnet, dass** der Träger eine Instrumententafel ist.

18. Verfahren zum Herstellen eines Airbagklappensystems, enthaltend den Schritt: Umspritzen eines Airbagdeckels in einem Spritzgusswerkzeug, wobei der Airbagdeckel mindestens zu 80% aus einem erstem Kunstharz besteht, und der zumindest bereichsweise eine Umrandung aufweist, wobei die Umrandung mit einem oder mehreren Noppen versehen ist, wobei die Noppen so ausgestaltet sind, dass sie als Abstandshalter in dem Spritzgusswerkzeug eine Verformung der Umrandung vermindern, mit einem Trägermaterial auf solche Weise, dass die Umrandung einschließlich der Noppen in den Träger hineinragt, und wobei das Trägermaterial mindestens zu 80% aus einem zweitem Kunstharz besteht, und wobei das zweite Kunstharz ein höheres elastisches Biegemodul hat als das erste Kunstharz.

19. Verfahren zum Herstellen eines Airbagklappensystems, wobei zunächst ein Airbagdeckel, der mindestens zu 80% aus einem erstem Kunststoff besteht, und der zumindest bereichsweise eine Umrandung aufweist, wobei die Umrandung mit einem oder mehreren Noppen versehen ist, in ein Spritzgusswerkzeug so eingelegt wird, dass die Umrandung des Airbagdeckels im geschlossenen Spritzgusswerkzeug die Oberfläche des Werkzeugs nicht berührt, und die Noppen auf Höhe der Werkzeugoberfläche enden, so dass die Noppen als Abstandshalter eine Verformung der Umrandung in dem Spritzgusswerkzeug vermindern, und in einem nächsten Schritt der Airbagdeckel mit einem Trägermaterial umspritzt wird, wobei das Trägermaterial mindestens zu 80% aus einem zweitem Kunststoff besteht.

20. Verfahren nach Anspruch 18 oder 19, **dadurch gekennzeichnet, dass** der Airbagdeckel, vorzugsweise in einem einzigen Prozessschritt, durch Spritzgießen einer thermoplastischen Kunststoffmasse hergestellt wird.

## Claims

1. An airbag flap system comprising an air bag cover (1), with a front surface (1a) directable towards an interior and located at the visible side, and a carrier (2), wherein the airbag cover consists at least 80 percent by weight of a first plastics material, and wherein the carrier consists at least 80 percent by weight of a second plastics material, and the first plastics material has a lower elastic flexural modulus than the second plastics material, and the air bag cover has a border at least regions of which project into the carrier, and the border (3) of the airbag cover is covered at its upper and lower side by the carrier, **characterised in that** the border of the airbag cover and the carrier are designed such that they are securely connected to one another also upon unfolding of the airbag, and the airbag cover is scored along weakening lines to achieve defined opening of the cover upon unfolding of the airbag.

2. An airbag flap system according to claim 1, **characterised in that** the border has one or more undercuts (4).

3. An airbag flap system according to claim 2, **characterised in that** the undercuts are produced by holes in the border.

4. An airbag flap system according to any one of the preceding claims, **characterised in that** the border is provided with one or a plurality of nubs (5).

5. An airbag flap system according to claim 4, **characterised in that** one or a plurality of nubs end level with the front surface of the airbag cover.

6. An airbag flap system according to any one of the preceding claims, **characterised in that** the front surface of the airbag cover and/or the side opposite the front surface of the airbag cover is/are provided with a reticular structure of elongated members (6) for reinforcement.

7. An airbag flap system according to any one of the preceding claims, **characterised in that** the airbag cover has a collar (7) at the edge of its front surface.

8. An airbag flap system according to any one of the preceding claims, **characterised in that** the airbag cover and the carrier are sealed so as to be foam-tight in relation to one another.

9. An airbag flap system according to any one of the preceding claims, **characterised in that** a single-layer or multi-layer upper layer (8) covers the carrier and the airbag cover.

10. An airbag flap system according to any one of the preceding claims, **characterised in that** the outer edge of the airbag cover is provided with one or a plurality of cut-outs (11).

11. An airbag flap system according to any one of the preceding claims, **characterised in that** the second plastics material has an elastic flexural modulus in the range of 2000 MPa to 5000 MPa.

12. An airbag flap system according to any one of the preceding claims, **characterised in that** the second plastics material has a thermal expansion coefficient of 1x10⁻⁵ °C⁻¹ to 6x10⁻⁵ °C⁻¹.

13. An airbag flap system according to any one of the preceding claims, **characterised in that** the first plastics material has an elastic flexural modulus in the range of 100 MPa to 1000 MPa.

14. An airbag flap system according to any one of the preceding claims, **characterised in that** the first plastics material has a thermal expansion coefficient of 8x10⁻⁵ °C⁻¹ to 20x10⁻⁵ °C⁻¹.

15. An airbag flap system according to any one of the preceding claims, **characterised in that** the first plastics material consists of one or a plurality of plastics materials from the groups: thermoplastic olefins, thermoplastic styrenes, thermoplastic polyurethanes, thermostatic polyurethanes, thermoplastic polyesters or rubber.

16. An airbag flap system according to any one of the preceding claims, **characterised in that** the second plastics material consists of one or a plurality of plastics materials from the groups: thermoplastic olefins, thermoplastic styrenes, thermoplastic polyurethanes, thermostatic polyurethanes or rubber.

17. An airbag flap system according to any one of the preceding claims, **characterised in that** the carrier is an instrument panel.

18. A method of manufacturing an airbag flap system, comprising the step: injection moulding of a carrier material around an airbag cover in an injection mould, wherein the airbag cover consists at least 80% of a first synthetic resin and at least regions thereof have a border, wherein the border is provided with one or a plurality of nubs, wherein the nubs are designed such that in the capacity of spacers in the injection mould they reduce deformation of the border, injection moulding taking place in such a manner that the border including the nubs projects into the carrier, and wherein the carrier material consists at least 80% of a second synthetic resin, and wherein the second synthetic resin has a higher elastic flexural modulus than the first synthetic resin.

19. A method of manufacturing an airbag flap system, wherein first of all an airbag cover which consists at least 80% of a first plastics material and at least regions of which have a border, the border being provided with one or a plurality of nubs, is placed in an injection mould in such a manner that, in the closed injection mould, the border of the airbag cover does not contact the surface of the tool, and the nubs end level with the tool surface, so that the nubs in the capacity of spacers reduce deformation of the border in the injection mould, and in a next step a carrier material is injection moulded around the air bag cover, wherein the carrier material consists at least 80% of a second plastics material.

20. A method according to claim 18 or 19, **characterised in that** the airbag cover is manufactured by injection moulding of a thermoplastic plastics material, preferably in a single process step.

## Revendications

1. Système de clapet de coussin gonflable contenant un couvercle de coussin gonflable (1) avec une surface frontale (1a) côté visible, orientable vers un habitacle, et un support (2), le couvercle de coussin gonflable étant constitué au moins à 80 % en poids d'une première matière plastique, et le support étant constitué au moins à 80 % en poids d'une seconde matière plastique, et la première matière plastique présentant un module de flexion élastique plus bas que la seconde matière plastique, et le couvercle de coussin gonflable présentant une bordure pénétrant au moins par endroits dans le support, et la bordure (3) du couvercle de coussin gonflable étant recouverte sur la face supérieure et la face inférieure par le support,
**caractérisé en ce que**
la bordure du couvercle de coussin gonflable et le support sont conçus de manière que ceux-ci soient fermement reliés entre eux même lorsque le coussin gonflable se déploie et
le couvercle de coussin gonflable est encoché le long de lignes d'affaiblissement pour obtenir une ouverture définie du couvercle lorsque le coussin gonflable se déploie.

2. Système de clapet de coussin gonflable selon la revendication 1, **caractérisé en ce que** la bordure présente un ou plusieurs détalonnages (4).

3. Système de clapet de coussin gonflable selon la revendication 2, **caractérisé en ce que** les détalonnages sont formés par des trous dans la bordure.

4. Système de clapet de coussin gonflable selon l'une quelconque des revendications précédentes, **caractérisé en ce que** la bordure est pourvue d'un ou de plusieurs boutons (5).

5. Système de clapet de coussin gonflable selon la revendication 4, **caractérisé en ce qu'**un ou plusieurs boutons se terminent à hauteur de la surface frontale du couvercle de coussin gonflable.

6. Système de clapet de coussin gonflable selon l'une quelconque des revendications précédentes, **caractérisé en ce que** la surface frontale et/ou la face opposée à la surface frontale du couvercle de coussin gonflable est pourvue, pour le raidissement, d'une structure réticulée de nervures (6).

7. Système de clapet de coussin gonflable selon l'une quelconque des revendications précédentes, **caractérisé en ce que** le couvercle de coussin gonflable présente une collerette (7) sur le bord de sa surface frontale.

8. Système de clapet de coussin gonflable selon l'une quelconque des revendications précédentes, **caractérisé en ce que** le couvercle de coussin gonflable et le support sont fermés l'un par rapport à l'autre de manière étanche à la mousse.

9. Système de clapet de coussin gonflable selon l'une quelconque des revendications précédentes, **caractérisé en ce qu'**une couche supérieure (8) à une ou plusieurs couches recouvre le support et le couvercle de coussin gonflable.

10. Système de clapet de coussin gonflable selon l'une quelconque des revendications précédentes, **caractérisé en ce que** le bord extérieur du couvercle de coussin gonflable est pourvu d'une ou de plusieurs découpes (11).

11. Système de clapet de coussin gonflable selon l'une quelconque des revendications précédentes, **caractérisé en ce que** la seconde matière plastique présente un module de flexion élastique d'un ordre compris entre 2000 mPa et 5000 mPa.

12. Système de clapet de coussin gonflable selon l'une quelconque des revendications précédentes, **caractérisé en ce que** la seconde matière plastique présente un coefficient de dilatation thermique de 1*10⁻¹ °C⁻¹ à 6*10⁻⁵ °C⁻¹.

13. Système de clapet de coussin gonflable selon l'une quelconque des revendications précédentes, **caractérisé en ce que** la première matière plastique présente un module de flexion élastique d'un ordre compris entre 100 MpA et 1000 MpA.

14. Système de clapet de coussin gonflable selon l'une quelconque des revendications précédentes, **caractérisé en ce que** la première matière plastique présente un coefficient de dilatation thermique compris entre 8*10⁻⁵ °C⁻¹ à 20*10⁻⁵ °C⁻¹.

15. Système de clapet de coussin gonflable selon l'une quelconque des revendications précédentes, **caractérisé en ce que** la première matière plastique est constituée d'une ou de plusieurs matières plastiques des groupes oléfines thermoplastiques, polyuréthanes thermostatiques, styrols thermoplastiques, polyuréthanes thermoplastiques, polyesters thermoplastiques ou caoutchouc.

16. Système de clapet de coussin gonflable selon l'une quelconque des revendications précédentes, **caractérisé en ce que** la seconde matière plastique est constituée d'une ou de plusieurs matières plastiques des groupes oléfines thermoplastiques, styrols thermoplastiques, polyuréthanes thermoplastiques ou caoutchouc.

17. Système de clapet de coussin gonflable selon l'une quelconque des revendications précédentes, **caractérisé en ce que** le support est un tableau de bord.

18. Procédé de fabrication d'un système de clapet de coussin gonflable contenant l'étape : enrobage d'un couvercle de coussin gonflable dans un outil de moulage par injection, le couvercle de coussin gonflable étant constitué au moins à 80 % d'une première résine synthétique, et présente au moins par endroits une bordure, la bordure étant pourvue d'un ou de plusieurs boutons, les boutons, en tant qu'écarteurs dans l'outil de moulage par injection, étant conçus de manière à réduire une déformation de la bordure, avec un matériau de support tel que la bordure y compris les boutons pénètrent à l'intérieur du support, et le matériau du support étant constitué au moins à 80 % d'une seconde résine synthétique, et la seconde résine synthétique ayant un module de flexion élastique supérieur à la première résine synthétique.

19. Procédé de fabrication d'un système de clapet de coussin gonflable, un couvercle de coussin gonflable, qui est constitué au moins à 80 % d'une première matière plastique et qui présente au moins par endroits une bordure, la bordure étant pourvue d'un ou de plusieurs boutons, étant d'abord placé dans un outil de moulage par injection de manière que la bordure du couvercle de coussin gonflable ne touche pas la surface de l'outil dans l'outil de moulage par injection fermé, et les boutons se terminent à hauteur de la surface de l'outil, ce qui fait que les boutons, en tant qu'écarteurs, réduisent une déformation de la bordure dans l'outil de moulage par injection, et au cours d'une étape suivante, le couvercle de coussin gonflable est enrobé d'un matériau de support, le matériau de support étant constitué au moins à 80 % d'une seconde matière plastique.

20. Procédé selon l'une quelconque des revendications 18 ou 19, **caractérisé en ce que** le couvercle de coussin gonflable est fabriqué de préférence en une seule étape de processus, par moulage par injection d'une masse thermoplastique.
